# FASCICULE DE BREVET EUROPEEN

(11) **EP 2 140 651 B1**
(45) Date de publication et mention de la délivrance du brevet: **24.10.2018**
(21) Numéro de dépôt: 08788088.6
(22) Date de dépôt: 28.03.2008
(51) Int. Cl.: H04L 29/06

(54) **PROCEDE DE GESTION D'UNE PLURALITE DE SESSIONS AUDIOVISUELLES DANS UN RESEAU IP ET SYSTEME DE COMMANDE ASSOCIE**
VERFAHREN ZUR VERWALTUNG MEHRERER AUDIOVISUELLER SITZUNGEN IN EINEM IP-NETZWERK UND ENTSPRECHENDES STEUERSYSTEM
METHOD FOR MANAGING A PLURALITY OF AUDIOVISUAL SESSIONS IN AN IP NETWORK AND RELATED CONTROL SYSTEM

(30) Priorité: 30.03.2007 FR 0754180
(43) Date de publication de la demande: 06.01.2010
(73) Titulaire: Orange, 75015 Paris (FR)
(72) Inventeur: LE LANN, Pierre-Yves, F-22300 Lannion (FR); FROMENTOUX, Gaël, F-22560 Pleumeur-Bodou (FR)
(86) Numéro de dépôt international: PCT/FR2008/050562
(87) Numéro de publication internationale: WO 2008/132414

(56) Documents cités:
- EP-A- 1 670 209
- US-A1- 2002 059 627
- US-A1- 2003 069 963

## Description

### 1. Domaine de l'invention

La présente invention concerne un procédé de gestion d'une pluralité de sessions audiovisuelles impliquant une pluralité de terminaux connectés à un réseau IP.

L'invention concerne également un système de commande de services audiovisuels mettant en oeuvre un tel procédé de gestion.

L'invention concerne en outre une plateforme de gestion de services comprenant un tel système.

L'invention concerne aussi un point d'accès connectant une pluralité de terminaux à un réseau IP comprenant une telle plateforme.

L'invention concerne également une entité de contrôle de session de type conversationnel apte à relayer une requête de changement concernant une session conversationnelle audit système de commande.

La présente invention concerne enfin un programme d'ordinateur mettant en oeuvre le procédé lorsqu'il est exécuté par un processeur.

Le domaine de l'invention est celui des télécommunications. L'invention s'applique de manière particulièrement avantageuse au domaine des réseaux IP permettant la distribution de contenus audiovisuels.

### 2. Art antérieur

Des architectures désignées par IPTV (« Internet Protocol TeleVision ») ont été développées pour rendre, sur des réseaux de type IP, des services comprenant notamment la télévision numérique par multidiffusion, la vidéo à la demande (« VoD »), la télévision à la demande (Catch-up TV ou TVoD) et les fonctions de magnétoscope numérique activées sur les flux de télévision ou de vidéo telles que l'enregistreur vidéo personnel en réseau NPVR (Network Based Personal Video Recorder) ou le contrôle des flux Live TV en temps réel NTS (Network-based Time Shifting ou encore appelé Pause-Like TV). De telles architectures utilisent des mécanismes de "streaming" et de diffusion "multicast".

On rappelle que le "streaming " ou "point à point" est un mécanisme permettant de transporter un flux de données d'une source vers une destination de manière continue, le flux étant traité au fil de l'eau par cette dernière sans qu'elle ait besoin de le stocker dans son intégralité.

Dans une architecture IPTV, un flux est constitué par une suite de paquets IP transportant un contenu audiovisuel. Ces paquets sont envoyés par la source dans le même ordre chronologique que les données multimédia qu'ils transportent.

On rappelle également que le " multicast" ou "point à multipoints" est un mode de diffusion à travers un réseau de transport permettant d'organiser et d'optimiser l'envoi d'un même flux de données d'une source vers une pluralité de destinations.

Actuellement, la plupart des systèmes de transport des flux audiovisuels se base sur des normes d'encapsulation proches de DVB (Digital Video Broadcasting) couplées avec des normes de codage de contenus audiovisuels MPEG (Motion Picture Experts Group). Ces normes proposent différents protocoles pour l'encapsulation des flux audiovisuels pour pouvoir les transporter dans les réseaux IP fixes et mobiles.

Le transport de flux audiovisuels occupe une bande passante importante. La mise en oeuvre d'un service IPTV nécessite donc, d'une part, de dimensionner et de planifier le réseau en conséquence et, d'autre part, de répartir les ressources réseau entre les différents abonnés au service.

Le brevet US2002/0059627 A1 divulgue un système qui adapte les coefficients de la transformée en cosinus discrète, utilisés pour transporter un flux audiovisuel, pour prendre en compte les ressources disponibles sur un lien.

### 3. Inconvénients de l'art antérieur

Il existe aujourd'hui autant d'architectures IPTV qui cohabitent que de réseaux d'accès et de types de terminaux d'utilisateurs différents. On peut accéder à un service IPTV depuis un téléviseur ou un PC par l'intermédiaire d'un réseau d'accès IP fixe de type WiMAX ou xDSL (Digital Subscriber Line) ou depuis un téléphone mobile par l'intermédiaire d'un réseau d'accès IP mobile de type 3G UMTS (third génération Universal Mobile Telecommunication System). Les différentes offres existantes (sur TV ou PC ou mobiles) sont actuellement indépendantes. Cette multiplicité d'infrastructures (mobile, fixe, voire IPTV et Internet TV) conduit à une situation peu optimale en termes de coûts de déploiement et maintenance, de consommation de bande passante sur les réseaux et de stockage sur le parc de serveurs de contenus. De plus, les interactions entre les services offerts dans le monde mobile et ceux offerts dans le monde fixe sont très limitées.

Par ailleurs, on notera que, dans un contexte de service fixe (xDSL), la cohabitation d'offres de TV-HD et de TV-SD nécessite actuellement le transport simultané des versions HD (Haute Définition) et SD (Simple Définition) associé à un même contenu audiovisuel sur les différents segments de réseau (backbone et collecte) et jusqu'au 1^{er} noeud de collecte DSL appelé DSLAM (Digital Subscriber Line Access Multiplexer).

Cette situation se retrouvera à l'identique si le service IPTV est élargi aux terminaux mobiles, pour lesquels une ou plusieurs versions supplémentaires du contenu audiovisuel devront être produites, stockées et transportées pour permettre à l'utilisateur d'accéder au contenu indifféremment depuis un accès fixe (WiMAX, Hotspot Wifi) ou depuis un accès mobile (UMTS 3G).

Dans un contexte de service fixe (xDSL), la capacité de l'abonné à accéder à un ou plusieurs services audiovisuels est établie puis configurée statiquement dans le réseau. Cette solution offre très peu de souplesse. Elle ne permet pas d'estimer la ressource réseau disponible à un instant donné ni d'adapter dynamiquement les conditions de distribution des contenus audiovisuels en fonction des ressources disponibles pour optimiser la cohabitation de services multimédia (audiovisuel, conversationnel, internet etc.), éventuellement entre plusieurs utilisateurs connectés à un même point d'accès.

Il existe donc un besoin de pallier ces inconvénients de l'art antérieur afin de mieux répondre à la demande des utilisateurs.

Plus précisément, il existe un besoin d'une solution permettant d'adapter dynamiquement les conditions de distribution d'un contenu audiovisuel en fonction des ressources disponibles sur un lien entre une entité du réseau et le point d'accès au réseau d'un terminal d'utilisateur.

Il existe également un besoin de gérer plusieurs sessions multimédia en parallèle, qu'elles soient audiovisuelles, conversationnelles ou d'un tout autre type.

Il existe en outre un besoin d'optimiser le partage des ressources sur un lien donné, entre plusieurs sessions multimédia à partir d'une gestion dynamique des ressources disponibles.

Un autre besoin est de proposer une architecture de gestion de sessions multimédia, capable de gérer tous types de sessions multimédia quel que soit le réseau d'accès d'où elles proviennent ou le type de terminal qui en a fait la demande.

### 4. Exposé de l'invention

L'invention répond à ce besoin en proposant un procédé de gestion d'une pluralité de sessions multimédia impliquant des terminaux d'utilisateurs connectés à un point d'accès d'un réseau IP, ledit réseau comprenant au moins un noeud de collecte, au moins une première session de type audiovisuel étant en cours, au cours de laquelle un premier terminal d'utilisateur reçoit un contenu audiovisuel encodé sous la forme d'une pluralité de flux audiovisuels échelonnés via un lien situé entre ledit point d'accès et ledit au moins un noeud de collecte.

Selon l'invention, ledit procédé est défini par l'objet de la revendication 1.

Ainsi, l'invention permet de résoudre le problème technique de la gestion dynamique d'une pluralité de sessions multimédia et le partage optimisé des ressources disponibles sur le lien qui peut constituer l'intégralité ou une partie du trajet entre le point d'accès et le noeud de collecte et permet le transport des flux de données vers le terminal d'utilisateur.

En effet, l'étape de récupération d'informations de contexte permet de connaître, à un instant donné, l'état de ressources disponibles sur ce lien, la répartition actuelle des ressources sur les sessions en cours et les ressources nécessaires pour la mise en oeuvre du changement demandé.

A partir de ces informations, l'étape d'évaluation évalue la possibilité d'une nouvelle répartition des ressources qui permettrait de satisfaire la requête de changement concernant la deuxième session. Il s'agit par exemple d'estimer la quantité de ressources qu'on peut préempter sur la première session audiovisuelle en cours et de comparer à la quantité de ressources minimale nécessaire pour satisfaire la requête de changement si celle-ci nécessite des ressources.

S'il s'avère possible de répartir différemment les ressources pour satisfaire la requête de changement, la requête est acceptée, un message d'acceptation est envoyé à l'entité en charge de mettre en oeuvre le changement requis et une étape d'adaptation des ressources met en oeuvre la nouvelle répartition des ressources qui a été calculée. Cette adaptation peut se traduire par un changement du nombre de flux audiovisuels échelonnés à transmettre par ledit lien au point d'accès pour les sessions en cours. On comprend ici que l'adaptation ne consiste en aucun cas à détruire des paquets IP d'un flux concernant une partie du contenu audiovisuel, mais à modifier les conditions de distribution de ce contenu audiovisuel sur le lien vers le point d'accès du premier terminal d'utilisateur.

Une telle modification des conditions de distribution du contenu audiovisuel est rendue possible par un encodage échelonné de ce contenu. En effet, un encodage échelonné permet un décodage partiel des flux audiovisuels représentant le contenu. Plus précisément, un flux dit de base conduit à un contenu audiovisuel décodé présentant une qualité de base. Si on y ajoute le décodage d'un flux de réhaussement, on obtient un contenu audiovisuel décodé de qualité améliorée.

Selon l'invention, le nombre de flux envoyés sur le lien pour la première session audiovisuelle est adapté en fonction des ressources disponibles sur ce lien, des autres sessions en cours et des demandes de changement reçues.

Selon un aspect de l'invention, l'étape de récupération d'informations de contexte consiste à envoyer des requêtes à des entités du réseau IP en charge de gérer ladite pluralité de sessions et à stocker les informations récupérées dans des profils associés aux terminaux d'utilisateurs.

Ces entités sont, par exemple, le point d'accès dans le cas d'une session audiovisuelle, une entité de contrôle de session d'appel ou un serveur d'appel dans le cas d'une session de type conversationnel.

Un avantage est la mise à jour de profils associés aux terminaux d'utilisateurs impliqués dans des sessions en cours.

Selon un aspect de l'invention, ladite pluralité de flux audiovisuels échelonnés est transportée en mode point à point sur ledit lien et l'étape de commande d'adaptation du transfert du contenu audiovisuel consiste à envoyer au premier terminal par l'intermédiaire dudit lien un message comprenant des paramètres d'adaptation désignant les flux audiovisuels qu'il peut demander à recevoir auprès d'une plateforme de gestion de services.

Cet aspect de l'invention concerne les sessions audiovisuelles au cours desquelles les flux audiovisuels sont envoyés, au moins partiellement, en mode point à point au premier terminal d'utilisateur. Ceci s'applique, par exemple au cas où le premier terminal d'utilisateur est impliqué dans une session de VoD en cours. Il faut noter également que si aujourd'hui les architectures IPTV existantes prévoient en effet une diffusion des flux audiovisuels en mode point à multipoint jusqu'au terminal de l'utilisateur, on pourrait envisager prochainement des architectures mixtes selon lesquelles les flux audiovisuels sont envoyés dans une partie amont en mode multipoint jusqu'à une entité du réseau puis dans une partie aval en mode point à point. Une telle configuration serait notamment intéressante pour le réseau mobile dont l'architecture est plus adaptée au mode de transport point à point et qui ne dispose pas toujours de la bande passante nécessaire à la diffusion point à multipoint. La diffusion pourrait se faire, par exemple, en amont d'un équipement de type SGSN ou GGSN (GPRS Support Node) et en mode point à point en aval de cet équipement. Ce serait intéressant aussi pour les abonnés Internet qui sont connectés à des réseaux de collecte de type ATM, lesquels ne sont pas très adaptés non plus au transport des flux en mode point à multipoint.

Selon un aspect de l'invention, le premier terminal reçoit les paramètres d'adaptation établis par l'étape de commande du procédé selon l'invention et les traduit en un message, par exemple selon le protocole RTSP (Real Time Streaming Protocol) qu'il adresse, par exemple, à la plateforme de gestion de services qui relaiera à un serveur de contenus en charge de diffuser le contenu audiovisuel.

Selon un autre aspect de l'invention, ladite pluralité de flux audiovisuels échelonnés est transportée par une pluralité de groupes de diffusion et l'étape de commande d'adaptation du transfert du contenu audiovisuel consiste à envoyer au premier terminal par l'intermédiaire dudit lien un message comprenant des paramètres d'adaptation désignant les groupes de diffusion auxquels ledit premier terminal d'utilisateur peut s'abonner ou doit se désabonner.

Un avantage de cette solution est la répartition des tâches spécifiques. Le terminal est spécialisé dans les requêtes liées à un service audiovisuel.

Selon cet aspect particulier de l'invention, les flux audiovisuels sont diffusés à l'aide de groupes de diffusion de type IP multicast. Ainsi, l'adaptation proprement dite est réalisée par le terminal concerné, qui va traduire les paramètres d'adaptation reçus en une requête auprès du noeud de collecte. Cette requête concernera un abonnement ou un désabonnement à un groupe de diffusion particulier, selon le type de paramètres d'adaptation reçu. Un groupe de diffusion comprend un flux comprenant une partie du contenu audiovisuel encodé. Dans ce cas, le terminal traduit les paramètres d'adaptation en autant de messages d'abonnement/désabonnement que de groupes de diffusion concernés à destination du noeud de collecte. Un tel message d'abonnement/désabonnement est, par exemple, un message de type IGMP (Internet Group Management Protocol) "report"/"leave", du même type que celui généré suite à une simple pression sur une touche d'une télécommande correspondant à une chaîne de programme audiovisuels. Le terminal adresse son message d'abonnement/ désabonnement à un noeud de collecte, par exemple le premier noeud de collecte de type DSLAM ou MSAN pour un réseau d'accès IP fixe, Ce message peut ensuite être traduit selon un autre protocole pour être retransmis aux entités plus amont du réseau jusqu'au serveur de contenus, par exemple le protocole PIM (Protocol Independant Multicast).

Dans ce mode de réalisation également, le terminal est spécialisé dans les requêtes liées à un service audiovisuel.

Selon un autre aspect de l'invention, lorsque la requête de changement est une demande d'établissement de la deuxième session, lesdits paramètres d'adaptation désignent les groupes de diffusion auxquels ledit premier terminal doit se désabonner.

En effet l'établissement d'une deuxième session, qu'elle soit de type conversationnel ou audiovisuel, nécessite des ressources disponibles, qui sont récupérées de la première session audiovisuelle en forçant le premier terminal à se désabonner d'au moins un groupe de diffusion.

De façon alternative, lorsque la requête de changement concernant la deuxième session est une demande de clôture de session, lesdits paramètres d'adaptation désignent les groupes de diffusion auxquels ledit premier terminal peut s'abonner.

En effet, en cas de clôture de la deuxième session, des ressources sont libérées et la première session peut en bénéficier au moins en partie en s'abonnant à des groupes de diffusion supplémentaires. La qualité du contenu audiovisuel reçu s'en trouve améliorée.

Selon un autre aspect de l'invention, ladite deuxième session est une session de type conversationnel gérée par une entité de contrôle de session et ledit procédé est remarquable en ce que ladite requête de changement est reçue de ladite entité de contrôle de session et en ce que ledit message comprenant ladite décision est envoyé à ladite entité de contrôle de session.

Selon cet aspect de l'invention, un échange est établi entre l'entité de contrôle de session qui gère la deuxième session de type conversationnel et le système de commande de sessions multimédia de telle sorte que le système de commande de sessions multimédia mettant en oeuvre le procédé selon l'invention ait connaissance des requêtes de changement concernant les sessions qui ne sont pas de type audiovisuel et puisse récupérer les informations s'y rapportant pour les stocker dans les profils qu'il tient à jour. En retour, le système de commande de sessions multimédia mettant en oeuvre le procédé selon l'invention lui envoie le message indiquant s'il rejette ou accepte la requête.

Selon un autre aspect de l'invention, les informations récupérées comprennent au moins un type d'abonnement desdits au moins un premier et deuxième utilisateurs et l'étape d'évaluation prend en compte le type d'abonnement desdits premier et deuxième utilisateurs pour évaluer une nouvelle répartition des ressources.

Une indication du type d'abonnement permet d'une part de vérifier que le deuxième utilisateur, dans le cas où la requête concerne l'accès à un contenu audiovisuel, a bien souscrit un abonnement lui permettant de bénéficier de ce type de service. Elle peut également permettre de vérifier que le premier utilisateur a un abonnement pour lequel il est possible de dégrader la qualité du contenu audiovisuel reçu en cours de session, au cas où la requête serait une demande d'établissement de session. Pour une demande de clôture de session au contraire, il peut être intéressant de prioriser les utilisateurs impliqués dans des sessions en cours pour choisir, selon le type d'abonnement (Gold, Silver, Bronze) quelle session bénéficiera en priorité des ressources libérées par la clôture de la deuxième session.

Corrélativement, l'invention concerne également un système de commande d'une pluralité de sessions multimédia impliquant des terminaux d'utilisateurs connectés à un point d'accès d'un réseau IP selon la revendication 9.

Selon un aspect de l'invention, ledit système de commande comprend des moyens pour envoyer un message d'acceptation de ladite requête à une entité du réseau en charge de mettre en oeuvre le changement requis.

Le système de commande de sessions multimédias est donc capable d'échanger des messages avec les différentes entités du réseau en charge de contrôler la pluralité de sessions en cours. On comprend qu'il est capable d'utiliser différents types de protocoles pour échanger des messages avec ces différentes entités.

L'invention concerne également une plateforme de gestion de services audiovisuels connectée à un réseau IP selon la revendication 11.

Dans un mode particulier de réalisation, les différentes étapes du procédé de commande d'une pluralité de sessions multimédia sont déterminées par des instructions de programmes d'ordinateurs.

En conséquence, l'invention concerne également un produit programme d'ordinateur téléchargeable depuis un réseau de communication et/ou stocké sur un support lisible par ordinateur et/ou exécutable par un microprocesseur selon la revendication 12.

L'invention concerne enfin un support d'informations lisible par un ordinateur selon la revendication 13.

Les revendications dépendantes définissent des modes de réalisation préférés de l'invention.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un réseau IP connecté à une plateforme de service selon l'art antérieur;
- la figure 2 présente de façon schématique un réseau IP mettant en oeuvre un procédé et un système de commande d'une pluralité de sessions audiovisuelles selon l'invention;
- la figure 3 présente un exemple de réalisation de l'invention.

### 6. Description d'un mode de réalisation particulier de l'invention

Le principe général de l'invention repose sur l'insertion dans le réseau IP d'un système de commande de sessions multimédia, qui, ayant accès à des informations de contexte dynamiques concernant l'ensemble des sessions en cours sur un lien particulier du réseau, est capable d'optimiser la répartition des ressources entre ces sessions.

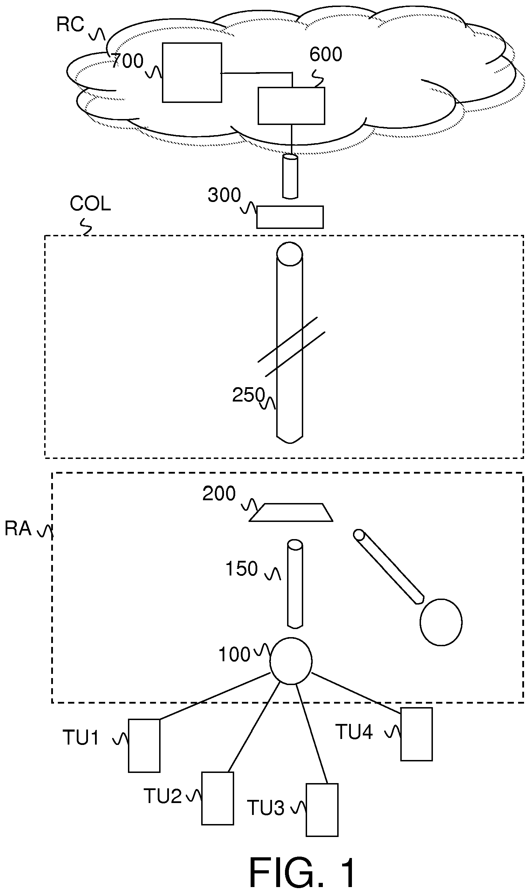

En référence à la figure 1, on présente un réseau IP 1 mettant en oeuvre une architecture de service de télévision sur TP IPTV selon l'art antérieur. Un tel réseau IP comprend un réseau coeur RC connecté à une pluralité de réseaux de collecte, par l'intermédiaire d'un noeud multimédia 300. Un réseau de collecte est structuré en anneaux pour assurer la distribution des chaînes de télévision sur IP sur une région. En France, le réseau de collecte de Bretagne compte, par exemple, l'anneau de collecte de Brest, l'anneau de collecte de Redon etc. Pour des raisons de clarté, un seul réseau de collecte a été représenté sur la figure 1. Ce réseau de collecte COL relie le noeud multimédia 300 à un premier noeud de collecte 200. Ce premier noeud de collecte 200 fait partie d'un réseau d'accès RA. Le réseau d'accès est, par exemple, un réseau IP fixe large bande xDSL ou un réseau IP mobile. Il comprend un premier noeud de collecte 200, qui est, par exemple, un DSLAM (Digital Subscriber Line Access Mode) selon la technologie ATM (Asynchronous Transfer Mode) ou un MSAN (Multimedia Services Access Network) selon la technologie IP pour un réseau IP fixe ou encore une antenne UMTS pour un réseau IP mobile. C'est le noeud le plus proche de l'utilisateur, autrement dit le dernier noeud IP de l'opérateur recevant une partie des flux audiovisuels. Le premier noeud de collecte 200 est relié à une pluralité de points d'accès, par exemple le point d'accès 100 représenté sur la Figure 1. Le point d'accès est, par exemple, une passerelle domestique, un hotspot WiFi, une antenne WiMAX ou UMTS (Universal Mobile Telecommunication System).

Le point d'accès connecte une pluralité de terminaux d'utilisateurs TU1 à TU4 au réseau IP.

On comprend que ces terminaux d'utilisateurs doivent se partager les ressources sur le lien 150, 250 entre le point d'accès 100 et le premier noeud de collecte 200. De façon générale, l'invention s'applique à N terminaux d'utilisateurs, reliés à M points d'accès, impliqués dans K sessions multimédia, N, M et K N étant des entiers supérieurs ou égaux à 1.

Un objet de l'invention est de proposer une solution pour optimiser l'utilisation des ressources sur un tel lien, quel que soit le type d'accès ou le type de terminal utilisés.

A cet égard, on notera que l'invention s'applique à tout type de lien, même situé plus en amont dans le réseau IP, pourvu qu'il soit mis en oeuvre pour transporter des données au cours de sessions multimédia impliquant des terminaux d'utilisateurs connectés au point d'accès 100. Il peut s'agir de l'intégralité du lien reliant le noeud multimédia 300 au point d'accès 100 via le premier noeud de collecte 200, ou seulement d'une partie de ce lien ou encore un lien situé plus en amont et non représenté sur la figure 1.

Une plateforme de gestion de services audiovisuels 700 est connectée au réseau coeur RC. Une telle plateforme de gestion de services audiovisuels selon l'art antérieur est spécifiquement dédiée à un type de réseau d'accès, par exemple xDSL et à un type de terminal, par exemple un téléviseur ou un PC. Elle ne peut donc établir de sessions qu'avec ce type de terminaux. De plus, la part des ressources disponibles sur le lien 150, 250 qui est allouée au service de télévision sur IP est fixée a priori, de façon statique.

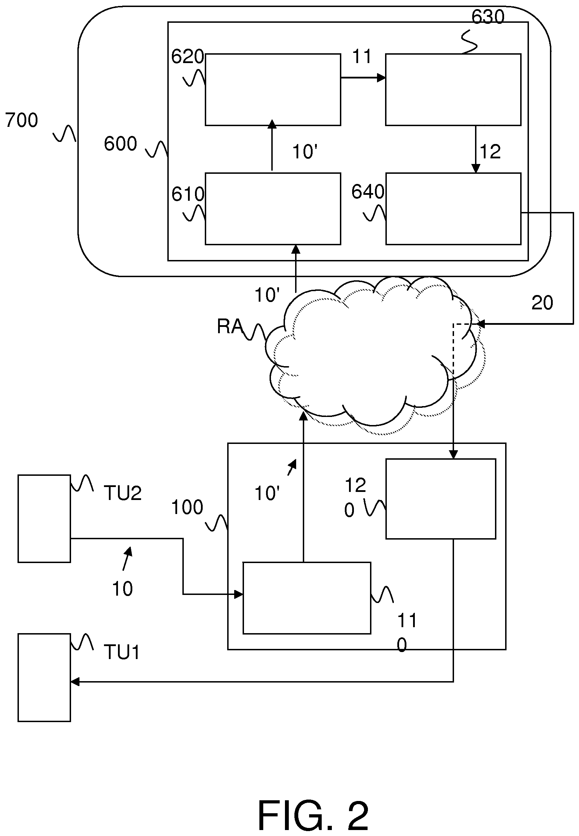

En référence à la figure 2, on présente un système de commande d'une pluralité de sessions audiovisuelles 600 selon l'invention, destiné à être mis en oeuvre dans le réseau IP 1. Un tel système peut avantageusement être hébergé par la plateforme de services 700. Selon un autre mode de réalisation, il peut être indépendant de la plateforme de gestion de services audiovisuels et être hébergé par un autre équipement du réseau, par exemple un équipement mettant en oeuvre une fonction de proxy pour le protocole RTSP, un serveur d'appel en charge de mettre en oeuvre des services de type conversationnel dans un réseau IP ou encore une entité de contrôle de sessions conversartionnelles.

Toutefois, l'invention ne se limite pas à ce cas particulier et on peut également envisager de distribuer les fonctions du système de commande 600 sur une pluralité d'équipement du réseau coeur RC.

Dans ce qui suit, on considère la configuration selon laquelle un premier terminal d'utilisateur TU1 est impliqué dans une première session audiovisuelle, au cours de laquelle il reçoit un contenu audiovisuel diffusé par un serveur de contenus. Pour des raisons de clarté, ce serveur n'est pas représenté sur la figure 2. Il faut noter cependant qu'il est généralement placé dans le réseau coeur RC.

On notera également que l'invention ne se limite pas à la diffusion de contenus, comme la diffusion de chaînes de télévision sur le réseau IP, c'est-à-dire au transport de flux audiovisuels en mode point à multipoint ou multicast, mais qu'elle s'applique également à l'envoi de flux audiovisuels point à point en mode unicast., comme l'envoi d'un flux audiovisuel streamé dans le cadre d'une session de vidéo à la demande (VoD).

Un deuxième terminal d'utilisateur TU2 émet une requête de changement concernant une deuxième session à destination du réseau IP. Cette requête peut être une demande d'établissement de la deuxième session, comme par exemple une demande d'établissement d'appel à destination d'un terminal d'utilisateur connecté à un autre point d'accès d'un autre réseau d'accès ou une demande de clôture de session. Cette requête de changement peut concerner également une demande d'amélioration de qualité de la session en cours, par exemple une demande de passage d'une qualité SD à une qualité HD pour la réception d'un programme de télévision sur IP.

Une telle requête de changement est reçue par le point d'accès 100 qui relie le terminal d'utilisateur TU1 au réseau d'accès RA du réseau IP. Ce point d'accès est, par exemple, une passerelle domestique, un hotspot WiFi etc.

Selon l'invention, le point d'accès 100 comprend des moyens 110 de transfert de la requête de changement 10 concernant la deuxième session à destination d'un système 600 de commande de sessions audiovisuelles dudit réseau IP sous la forme d'un message 10'. Si le deuxième terminal est un téléviseur, une requête d'établissement de deuxième session peut prendre la forme d'un message "report" IGMP (Internet Group Management Protocol) commandant l'abonnement à une chaîne de télévision sur IP du deuxième terminal. Un tel message d'abonnement est destiné au noeud de collecte 200.

Selon l'invention, les moyens de transfert 110 permettent de rediriger la requête de changement vers un système de commande d'une pluralité de sessions audiovisuelles 600 sous la forme d'un message 10'.

Selon un mode de réalisation de l'invention, le point d'accès comprend des moyens de récupération d'informations relatives à un contexte de ladite pluralité de sessions à partir des messages transférés par les moyens de transfert 110. En d'autres termes, le point d'accès 100 est capable de récupérer des informations contenues dans un tel message avant de le relayer vers son destinataire, ce qui lui permet de se tenir informé de l'état de toutes les sessions en cours. On dit aussi qu'il joue un rôle de proxy vis-à-vis de ce type de message. C'est le cas notamment d'une passerelle domestique fonctionnant en mode routé.

Les informations récupérées comprennent au moins une indication d'un type de sessions, impliquant ladite pluralité de terminaux d'utilisateurs.

De façon avantageuse, le point d'accès 100 est en outre apte à transférer ladite requête de changement au système de commande de sessions audiovisuelles 600, lorsqu'au moins une des sessions parmi la dite au moins une première session en cours et la deuxième session concerne une transmission d'un contenu audiovisuel.

En effet, comme on le verra dans ce qui suit, le système de commande 600 selon l'invention a pour but de faire cohabiter de façon optimisée une ou plusieurs sessions audiovisuelles, coûteuses en ressources réseaux, avec des sessions de type conversationnel ou Internet, en proposant une solution pour faire varier facilement la quantité de ressources allouées aux sessions de type audiovisuel. C'est donc préférentiellement lorsqu'une session de type audiovisuel est en cours, que l'on souhaite solliciter le système de commande 600 selon l'invention.

Le système de commande 600 comprend des moyens 610 de réception du message 10' transféré par le point d'accès 100. Cet évènement a pour effet de déclencher la mise en oeuvre de moyens de récupération 620 d'informations de contexte concernant d'éventuelles sessions en cours qui impliqueraient le point d'accès 100 et le noeud de collecte 200 via le lien 150.

Ces informations de contexte 12 comprennent, par exemple, pour chacune des sessions en cours :
- un profil de l'utilisateur attaché à un terminal d'utilisateur impliqué dans la session. Il s'agit, par exemple, d'interroger le noeud de collecte 200, à l'aide d'un mécanisme basé sur un protocole permettant de piloter un équipement à distance, par exemple le protocole simple de commande de réseau SNMP (Simple Network Management Protocol), pour extraire le type d'abonnement et les options souscrites. Si le noeud de collecte est un DSLAM, ces données sont stockées dans une table, par exemple une table MIB (Management Information Table) contenu dans un routeur, un premier noeud de collecte de type DSLAM ou un terminal de type décodeur (Set Top Box). Il faut noter que certaines informations peuvent également être obtenues en interrogeant le système d'informations du réseau IP, lorsqu'elles ne sont pas disponibles localement sur un équipement plus proche.
- une mesure du trafic en temps réel sur le lien 150. Une telle mesure peut être obtenue en interrogeant une sonde installée sur le noeud de collecte 200 ou sur le point d'accès 100. Une telle mesure permet à un point d'accès de connaître à tout instant l'état des ressources utilisées;
- une évaluation de l'usage instantané pour un terminal d'utilisateur donné connecté au point d'accès 100. Elle peut être obtenue en interrogeant un équipement réseau tel que le point d'accès 100, quand il s'agit d'une passerelle domestique assez évoluée pour être capable de fonctionner en mode routé. Dans ce cas, la passerelle domestique peut également jouer un rôle de proxy pour un protocole de type RTSP pour les sessions audiovisuelles de type VoD en mode point à point ou un rôle de proxy IGMP pour les sessions audiovisuelles de type télévision sur IP, ce qui lui permet de connaître à tout instant l'état des sessions en cours et d'en déduire, terminal d'utilisateur par terminal d'utilisateur l'usage en cours à un instant donné.

De telles informations concernant les ressources utilisées peuvent être regroupées dans des profils associés aux terminaux d'utilisateurs, décrivant un état des sessions multimédia en cours.

De telles informations permettent notamment de déduire la quantité de ressources disponible en termes de bande passante, à l'instant de la requête sur le lien 150. Elles sont transmises à des moyens d'évaluation 630 d'une nouvelle répartition des ressources sur le lien 150 nécessitée par le changement requis.

Les moyens 630 d'évaluation d'une nouvelle répartition des ressources connaissent, à partir des informations de contexte reçues 12, une quantité de ressources minimale requise pour mettre en oeuvre le changement dans la deuxième session.

S'il s'agit d'une demande d'établissement de session, cette quantité de ressources minimale est positive. Si elle est supérieure à la quantité de ressources disponible sur le lien, les moyens d'évaluation 630 vont évaluer auprès de quelles sessions en cours il est possible de préempter des ressources pour récupérer la quantité manquante.

Si, au contraire, la requête de changement est une demande de fin de deuxième session, la quantité de ressources nécessitée par la mise en oeuvre du changement est négative. Dans ce cas, les moyens d'évaluation 630 évaluent une nouvelle répartition des ressources permettant de réattribuer la quantité de ressources restituée par la deuxième session aux autres sessions en cours.

Selon l'invention, les moyens d'évaluation 630 évaluent la possibilité de préempter des ressources auprès de sessions en cours de type audiovisuel, par exemple auprès de la première session.

En effet, selon l'invention, le contenu audiovisuel transmis au terminal d'utilisateur TU1 au cours de la première session est encodé de façon échelonnée selon une pluralité de flux audiovisuels. Par exemple, le contenu échelonnable ou "scalable" est encodé selon 1 + N (N entier supérieur à 1) flux, le premier flux constituant une couche de base et les N flux suivants des couches de rehaussement ou d'amélioration, obtenues selon des techniques de codage connues de l'homme du métier. Le décodage de la couche de base permet d'obtenir le contenu audiovisuel avec une qualité de base et le décodage successif des couches de rehaussement permet d'améliorer graduellement la qualité de base. Chaque flux est ensuite fractionné dans des paquets IP.

Comme évoqué précédemment, le transport des flux audiovisuels peut ensuite se faire soit en mode unicast ou point à point, soit en mode multicast ou mode point à multipoint, soit de façon mixte. Le mode unicast est mis en oeuvre, par exemple pour une session de VoD. Le mode multicast est utilisé pour diffuser notamment des chaînes de télévision vers les premiers points d'accès.

Dans cet exemple, les flux audiovisuels de la première session sont transportés en mode multicast. Ils sont donc injectés dans le réseau sous forme de groupes de diffusion du type flux IP multicast. De tels groupes de diffusion sont identifiés par un couple d'adresses (@IPS, @IPG), @IPS étant l'adresse de la source et @IPG l'adresse du groupe.

On présente, dans le tableau 1 ci-dessous un exemple de découpage du contenu audiovisuel en une couche de base et 6 couches de rehaussement, transportées chacune par des groupes de diffusion IP multicast différents. Les couches sont classées selon un ordre de qualité croissante, qui conditionne un ordre de décodage. En d'autres termes, on ne peut décoder la couche de rehaussement N que si on a décodé la couche de rehaussement N-1. Le tableau 1 indique le débit utilisé par chaque couche.

**Tableau 1**

| | Débit / couche | Flux transport | Cible |
|---|---|---|---|
| Couche de base | 2 Mbit/s | (@IPS; @IP G10) | SD- |
| Couche rehaussement 1 | 1 Mbit/s | (@IPS; @IP G11) | SD |
| Couche rehaussement 2 | 1,5 Mbit/s | (@IPS; @IP G11) | SD |
| Couche rehaussement 3 | 2,0 Mbit/s | (@IPS; @IP G12) | SD+ |
| Couche rehaussement 4 | 2,5 Mbit/s | (@IPS; @IP G13) | HD- |
| Couche rehaussement 5 | 3,0 Mbit/s | (@IPS; @IP G14) | HD |
| Couche rehaussement 6 | 3,0 Mbit/s | (@IPS; @IP G14) | HD+ |

On comprend qu'un tel découpage permet de s'adapter à une quantité de ressources disponibles sur un lien considéré en n'envoyant sur ce lien que la couche de base et un nombre approprié de couches de rehaussement dont la somme des débits utilisés est inférieure ou égale à la quantité de ressources disponible.

On comprend également que le principe d'encapsuler 1 + N flux échelonnés constitutifs d'un contenu audiovisuel dans une pluralité de groupes de diffusion permet de faire varier facilement la quantité de ressources utilisée pour le transport de ce contenu par le simple jeu d'abonnement/ désabonnement à des groupes de diffusion.

De façon avantageuse, les informations de contexte réseaux récupérées comprennent les groupes de diffusion IP multicast auquel le premier terminal d'utilisateur est abonné.

Il s'agit donc pour les moyens d'évaluation 630 de calculer, pour la première session en cours, combien de flux de rehaussement peuvent être supprimés et d'en déduire la quantité de ressources qui peut ainsi être libérée. Ils envoient le résultat de leur évaluation à des moyens 640 de décision et de commande d'adaptation.

A titre de premier exemple, on considère que le premier terminal d'utilisateur reçoit le flux correspondant à la couche de base à 2 Mbits/s, la première couche de rehaussement à 1 Mbits/s, la deuxième couche de rehaussement à 1,5 Mbits/s, la troisième couche de rehaussement à 2 Mbits/s et la quatrième couche de rehaussement à 2,5 Mbits/s, ce qui fait un total de 9 Mbits/s. On considère également que la totalité des ressources est occupée par cette première session. La demande d'établissement d'une deuxième session concerne un service de téléchargement d'un contenu de Vidéo à la demande VoD (Video on Demand) nécessitant 2,5 Mbits/s via Internet. Les moyens d'évaluation 630 transmettent aux moyens de décision 640 un résultat d'évaluation indiquant que la quantité de ressources requise par le changement peut être préemptée de la première session en désabonnant le premier terminal d'utilisateur du groupe de diffusion correspondant au quatrième flux de rehaussement. Par conséquent, les moyens de décision et d'adaptation 640 décident que la requête en changement est acceptable. Ils envoient un message d'acceptation à destination du deuxième terminal d'utilisateur et un message de commande d'adaptation à destination du premier terminal d'utilisateur lui commandant de se désabonner du groupe de diffusion (@IPS, IPG13) correspondant à la quatrième couche de rehaussement, de façon à récupérer la quantité de ressources de 2,5 Mbits/s demandée par la deuxième session.

A titre de deuxième exemple, on considère que la première session est la seule autre session en cours, que le premier terminal est abonné aux groupes de diffusion correspondant au flux de base et à trois flux de rehaussement et que la clôture de la deuxième session permet de récupérer 2,5 Mbits/s. Dans cette configuration, les moyens d'évaluation 630 proposent de réattribuer la quantité de ressources libérée à la première session en l'abonnant au groupe de diffusion correspondant au quatrième flux de rehaussement.

Pour réaliser la nouvelle répartition des ressources proposée par les moyens 630, les moyens de décision et de commande d'adaptation 640 envoient au premier terminal d'utilisateur TU1, par l'intermédiaire du point d'accès 100, un message 20 comprenant des paramètres d'adaptation de ladite première session permettant de mettre en oeuvre ladite nouvelle répartition des ressources. Selon le premier exemple décrit ci-dessus, de tels paramètres d'adaptation désignent le groupe de diffusion G13, auquel le premier terminal doit se désabonner. Selon le deuxième exemple décrit ci-dessus, les paramètres d'adaptation désignent le groupe diffusion G13 auquel le premier terminal doit s'abonner.

Il faut noter qu'un tel message 20 est d'abord reçu par des moyens de transfert 120 du point d'accès 100 qui le relaient jusqu'au premier terminal TU1.

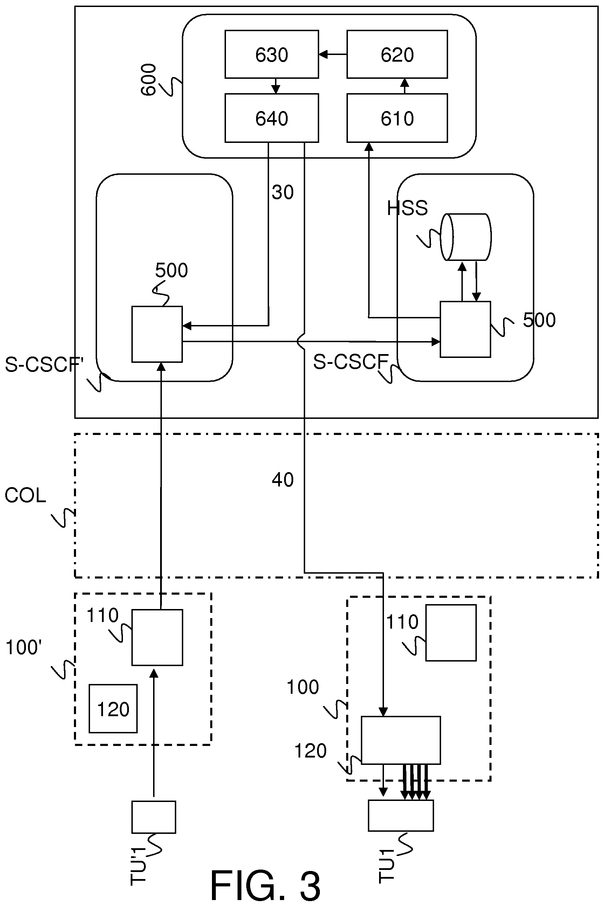

On présente maintenant, en relation avec la figure 3, un autre exemple de mise en oeuvre du système de gestion d'une pluralité de sessions et du procédé selon l'invention. On considère, comme dans les exemples précédents, le cas où un premier terminal d'utilisateur TU1 est impliqué dans une première session de type audiovisuel, au cours de laquelle il reçoit un contenu audiovisuel sous la forme d'une pluralité de flux transportés par différents groupes de diffusion. Dans cet exemple, un terminal d'utilisateur TU'1 connecté à un autre point d'accès 100' d'un autre réseau d'accès RA' au réseau IP, envoie une demande d'établissement de session de type visiophonie Haute Définition nécessitant un débit de 1,5 Mbits/s au réseau IP. Cette requête est relayée par les moyens de transfert 110' de son point d'accès 100' dans le réseau d'accès RA', puis à travers le réseau de collecte COL' jusqu'au réseau coeur RC. Elle est reçue par une entité de contrôle de session S-CSCF' («Serving-Call Session Controller Function ») capable de router la requête vers une entité de contrôle de session S-CSCF en charge de gérer les appels à destination et en provenance du terminal d'utilisateur TU1.

On notera que les entités de contrôles de sessions S-CSCF et S-CSCF' s'échangent des messages de signalisation utilisant un protocole de type SIP (« Session Initiation Protocol »). Elles peuvent faire partie d'une architecture de type IMS (« IP Multimedia Subsystem »), mais l'invention ne se limite pas à ce cas particulier. Pour rappel, l'IMS est une architecture de réseau introduite par le 3GPP pour les réseaux mobiles, puis reprise par TISPAN pour les réseaux fixes. Cette architecture permet l'établissement dynamique et le contrôle de sessions multimédia entre deux terminaux d'utilisateurs ainsi que la réservation de ressources au niveau du réseau de transport des flux médias. Elle gère aussi l'interaction entre services.

L'entité de contrôle de session S-CSCF reçoit la requête transmise par l'entité S-CSCF' et interroge une base de données HSS (Home Subscriber Server) pour récupérer des informations de contexte réseau, en particulier une liste de services auquel l'utilisateur 1 a souscrit. Selon l'invention, l'entité de contrôle S-CSCF comprend des moyens 500 de transmission de requête au système de gestion de sessions 600. L'entité de contrôle S-CSCF transmet effectivement la requête au système 600, par exemple si l'utilisateur du premier terminal a souscrit à un abonnement à un service de télévision sur IP, ce afin d'évaluer les possibilités d'interaction entre le service conversationnel demandé et la session audiovisuelle en cours.

On notera que, dans cet exemple, le système de commande 600 et l'entité de contrôle de session S-CSCF sont des entités distinctes. Toutefois, l'invention n'est pas limitée à ce cas particulier et on peut très bien envisager que le système de commande 600 soit hébergé par une telle entité de contrôle de session.

La requête est reçue par les moyens de réception 610 qui la transmet aux moyens 620 de récupération d'informations de contexte. Dans cet exemple, la quantité de ressources allouées au lien 150 entre le point d'accès 100 et le noeud de collecte 200 est de 10 Mbits/s. La première session en cours, de type audiovisuel, utilise 9 Mbits/s répartis sur le flux de base et les 4 flux de rehaussement présentés en référence au tableau 1. Il reste donc une quantité de ressources de 1 Mbits/s disponible.

Les informations liées aux ressources sont envoyées aux moyens 630 d'évaluation d'une nouvelle répartition des ressources, qui évaluent les flux de rehaussement constitutifs du contenu audiovisuel de la première session pouvant être supprimés et en déduisent une quantité de ressources pouvant être libérée. Ils envoient le résultat de leur évaluation aux moyens de décision 640, en proposant de supprimer la quatrième couche de réhaussement à 2,5 Mbits/s. Les moyens de décision 640 envoient un message d'acceptation 30 à l'entité de contrôle de session S-CSCF' pour établissement de la session d'appel. Ils transmettent également au premier terminal via les moyens de transfert 120 de son point d'accès 100 un message 40 comprenant des paramètres d'adaptation de ladite première session permettant de mettre en oeuvre ladite nouvelle répartition des ressources. Ces paramètres précisent, par exemple, le groupe de diffusion auquel le premier terminal d'utilisateur devra se désabonner.

Selon une implémentation particulière de l'invention, les étapes du procédé de gestion d'une pluralité de sessions multimédia selon l'invention sont déterminées par les instructions d'un programme d'ordinateur incorporé dans un dispositif de traitement de données tel que le système de commande de sessions 600. Le programme comporte des instructions de programme qui, lorsque ledit programme est chargé et exécuté dans le dispositif dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## Revendications

1. Procédé de gestion d'une pluralité de sessions multimédia impliquant des terminaux d'utilisateurs connectés à un point d'accès (100) d'un réseau IP, ledit réseau comprenant au moins un noeud de collecte (200, 300), au moins une première session de type audiovisuel étant en cours, ledit procédé étant **caractérisé en ce que** pendant ladite au moins une première session un premier terminal d'utilisateur reçoit un contenu audiovisuel échelonné, encodé selon 1+N, N entier supérieur à 1, flux audiovisuels, le premier flux constituant une couche de base et les N flux audiovisuels suivants des couches de rehaussement ou d'amélioration, via un lien situé entre ledit point d'accès et ledit au moins un noeud de collecte (200, 300), ledit procédé comprenant les étapes de :
- réception d'un message comprenant une requête de changement concernant une deuxième session parmi ladite pluralité de sessions;
- récupération d'informations relatives à un contexte de ladite pluralité de sessions, lesdites informations comprenant au moins une quantité de ressources disponible sur ledit lien, une quantité de ressources utilisée par ladite au moins une première session et une quantité de ressources minimale requise pour mettre en oeuvre ledit changement sur la deuxième session;
- évaluation d'une nouvelle répartition des ressources entre ladite au moins une première session en cours et ladite deuxième session induite par le changement requis pour la deuxième session, à partir de la quantité de ressources disponible sur le lien, la quantité de ressources utilisée par ladite au moins une première session et la quantité de ressources minimale requise par ledit changement;
- prise de décision d'accepter ou de rejeter la requête de changement en fonction d'un résultat de ladite évaluation et envoi d'un message comprenant ladite décision;
- en cas de décision positive, commande d'adaptation du transfert du contenu audiovisuel effectué sur ledit lien au cours de ladite première session en modifiant ledit nombre N de flux audiovisuels à transmettre.

2. Procédé de gestion d'une pluralité de sessions multimédia de terminaux d'utilisateurs selon la revendication 1, **caractérisé en ce que** l'étape de récupération d'informations de contexte consiste à envoyer des requêtes à des entités du réseau IP en charge de gérer ladite pluralité de sessions et à stocker les informations récupérées dans des profils associés aux terminaux d'utilisateurs.

3. Procédé de gestion d'une pluralité de sessions de terminaux d'utilisateurs selon l'une des revendications 1 et 2, **caractérisé en ce que** ladite pluralité de flux audiovisuels échelonnés est transportée par une pluralité de groupes de diffusion et **en ce que** l'étape de commande d'adaptation du transfert du contenu audiovisuel consiste à envoyer au premier terminal par l'intermédiaire dudit lien (150) un message (20) comprenant des paramètres d'adaptation désignant les groupes de diffusion auxquels ledit premier terminal d'utilisateur peut s'abonner ou doit se désabonner.

4. Procédé de gestion d'une pluralité de sessions de terminaux d'utilisateurs selon l'une des revendications 1 et 2, **caractérisé en ce que** ladite pluralité de flux audiovisuels échelonnés est transportée en mode point à point sur ledit lien et **en ce que** l'étape de commande d'adaptation du transfert du contenu audiovisuel consiste à envoyer au premier terminal par l'intermédiaire dudit lien (150) un message (20) comprenant des paramètres d'adaptation désignant les flux audiovisuels qu'il peut demander à recevoir.

5. Procédé de gestion d'une pluralité de sessions de terminaux d'utilisateurs selon la revendication 3, **caractérisé en ce que**, lorsque la requête de changement est une demande d'établissement de la deuxième session, lesdits paramètres d'adaptation désignent les groupes de diffusion auxquels ledit premier terminal doit se désabonner.

6. Procédé de gestion d'une pluralité de sessions de terminaux d'utilisateurs selon la revendication 5, **caractérisé en ce que**, lorsque la requête de changement concernant la deuxième session est une demande de clôture de session, lesdits paramètres d'adaptation désignent les groupes de diffusion auxquels ledit premier terminal peut s'abonner.

7. Procédé de gestion d'une pluralité de sessions multimédia de terminaux d'utilisateurs selon l'une quelconque des revendications 1 à 6, dans lequel ladite deuxième session est une session de type conversationnel gérée par une entité de contrôle de session, ledit procédé étant **caractérisé en ce que** ladite requête de changement est reçue de ladite entité de contrôle de session et **en ce que** ledit message comprenant ladite décision d'accepter ou de rejeter la requête est envoyé à ladite entité de contrôle de session.

8. Procédé de gestion d'une pluralité de sessions multimédia de terminaux d'utilisateurs selon l'une quelconque des revendications 1 à 7, **caractérisé en ce que** lesdites informations récupérées comprennent au moins un type d'abonnement desdits premiers et deuxième utilisateurs et **en ce que** ladite étape d'évaluation prend en compte le type d'abonnement desdits premier et deuxième utilisateurs pour évaluer une nouvelle répartition des ressources.

9. Système (600) de commande d'une pluralité de sessions multimédia impliquant des terminaux d'utilisateurs connectés à un point d'accès (100) d'un réseau IP, ledit réseau comprenant au moins un noeud de collecte (200, 300), au moins une première session audiovisuelle étant en cours, pendant laquelle ledit premier terminal reçoit un contenu audiovisuel via un lien (150, 250) situé entre ledit point d'accès (100) et ledit au moins un noeud de collecte (200, 300), ledit système étant **caractérisé en ce que** ledit contenu audiovisuel est échelonné, encodé selon 1+N, N entier supérieur à 1, flux audiovisuels, le premier flux constituant une couche de base et les N flux audiovisuels suivants des couches de rehaussement ou d'amélioration, ledit système comprenant:
- des moyens de réception (610) d'une requête de changement concernant une deuxième session parmi ladite pluralité de sessions;
- des moyens de récupération (620) d'informations relatives à un contexte de ladite pluralité de sessions comprenant au moins une quantité de ressources disponible sur ledit lien, une quantité de ressources utilisée par ladite au moins une première session et une quantité de ressources minimale requise pour mettre en oeuvre ledit changement sur la deuxième session;
- des moyens d'évaluation (630) d'une possibilité de nouvelle répartition de ressources entre ladite au moins une première session en cours et ladite deuxième session, induite par le changement requis pour la deuxième session, à partir de la quantité de ressources disponible sur le lien, la quantité de ressources utilisée par ladite au moins une première session et la quantité de ressources minimale requise par ledit changement, lesdits moyens d'évaluation étant adaptés pour être mis en oeuvre si la quantité de ressources minimale requise est supérieure à la quantité de ressources disponible sur ledit lien;
- des moyens (640) de décision d'accepter ou de rejeter ladite requête adaptés, en cas de décision positive, pour commander une adaptation du transfert du contenu audiovisuel effectué sur ledit lien au cours de ladite première session en modifiant ledit nombre N de flux audiovisuels à transmettre.

10. Système de commande d'une pluralité de sessions multimédia selon la revendication 9, **caractérisé en ce qu'**il comprend des moyens pour envoyer un message d'acceptation de ladite requête à une entité du réseau en charge de mettre en oeuvre le changement requis.

11. Plateforme (700) de gestion de services audiovisuels dans un réseau IP, **caractérisée en ce qu'**elle comprend un système (600) de commande d'une pluralité de sessions impliquant des terminaux d'utilisateurs connectés à un point d'accès d'un réseau IP selon la revendication 9.

12. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon les revendications 1 à 8.

13. Support d'enregistrement lisible par un ordinateur sur lequel est enregistré un produit programme d'ordinateur comprenant des instructions pour l'exécution des étapes du procédé selon l'une quelconque des revendications 1 à 8.

## Patentansprüche

1. Verfahren zur Verwaltung einer Vielzahl von Multimediasitzungen, das Benutzerendgeräte voraussetzt, die an einen Zugangspunkt (100) eines IP-Netzwerks angeschlossen sind, wobei das Netzwerk mindestens einen Sammelknoten (200, 300), mindestens eine erste im Laufen befindliche Sitzung audiovisuellen Typs umfasst, wobei das Verfahren **dadurch gekennzeichnet ist, dass** während der mindestens einen ersten Sitzung ein erstes Benutzerendgerät einen gestaffelten audiovisuellen Inhalt empfängt, der nach 1+N, wobei N eine ganze Zahl größer als 1 ist, audiovisuellen Strömen codiert ist, wobei der erste Strom eine Basisschicht und die N folgenden audiovisuellen Ströme Erhöhungs- oder Verbesserungsschichten darstellen, über eine Verbindung, die sich zwischen dem Zugangspunkt und dem mindestens einen Sammelknoten (200, 300) befindet, wobei das Verfahren die folgenden Schritte umfasst:
- Empfang einer Nachricht, umfassend einen Antrag auf Änderung betreffend eine zweite Sitzung unter der Vielzahl von Sitzungen;
- Abrufen von Informationen zu einem Kontext der Vielzahl von Sitzungen, wobei die Informationen mindestens eine verfügbare Ressourcenmenge auf der Verbindung, eine verwendete Ressourcenmenge durch die mindestens eine erste Sitzung und eine erforderliche Mindestressourcenmenge für den Einsatz der Änderung an der zweiten Sitzung umfassen;
- Bewertung der Neuverteilung der Ressourcen zwischen der mindestens einen ersten laufenden Sitzung und der zweiten Sitzung, die durch die erforderliche Änderung für die zweite Sitzung induziert wird, auf Basis der verfügbaren Ressourcenmenge auf der Verbindung, der verwendeten Ressourcenmenge durch die mindestens eine erste Sitzung und der erforderlichen Mindestressourcenmenge für die Änderung;
- Entscheidung, den Antrag auf Änderung anzunehmen oder abzulehnen, in Abhängigkeit von einem Ergebnis der Bewertung und Senden einer Nachricht, umfassend die Entscheidung;
- im Falle einer positiven Entscheidung, Steuerung einer Anpassung des Transfers des audiovisuellen Inhalts, der auf der Verbindung während der ersten Sitzung durchgeführt wird, wobei die Anzahl N von zu übertragenden audiovisuellen Strömen geändert wird.

2. Verfahren zur Verwaltung einer Vielzahl von Multimediasitzungen von Benutzerendgeräten nach Anspruch 1, **dadurch gekennzeichnet, dass** der Schritt des Abrufens von Kontextinformationen darin besteht, Anträge an Einheiten des IP-Netzwerks zu senden, das mit der Verwaltung der Vielzahl von Sitzungen beauftragt ist, und die abgerufenen Informationen in den Benutzerendgeräten zugeordneten Profilen zu speichern.

3. Verfahren zur Verwaltung einer Vielzahl von Sitzungen von Benutzerendgeräten nach einem der Ansprüche 1 und 2, **dadurch gekennzeichnet, dass** die Vielzahl von gestaffelten audiovisuellen Strömen von einer Vielzahl von Verbreitungsgruppen transportiert wird, und dass der Schritt der Steuerung einer Anpassung des Transfers audiovisuellen Inhalts darin besteht, an das erste Endgerät über die Verbindung (150) eine Nachricht (20) zu senden, umfassen Anpassungsparameter, die die Verbreitungsgruppen bezeichnen, bei denen sich das erste Benutzerendgerät anmelden oder abmelden kann.

4. Verfahren zur Verwaltung einer Vielzahl von Sitzungen von Benutzerendgeräten nach einem der Ansprüche 1 und 2, **dadurch gekennzeichnet, dass** die Vielzahl von gestaffelten audiovisuellen Strömen im Punkt-zu-Punkt-Modus auf der Verbindung transportiert wird, und dass der Schritt der Steuerung einer Anpassung des Transfers des audiovisuellen Inhalts darin besteht, an das erste Endgerät über die Verbindung (150) eine Nachricht (20) zu senden, umfassend Anpassungsparameter, die die audiovisuellen Ströme bezeichnen, deren Empfang es anfordern kann.

5. Verfahren zur Verwaltung einer Vielzahl von Sitzungen von Benutzerendgeräten nach Anspruch 3, **dadurch gekennzeichnet, dass**, wenn der Änderungsantrag ein Antrag auf Herstellung der zweiten Sitzung ist, die Anpassungsparameter die Verbreitungsgruppen bezeichnen, bei denen sich das erste Endgerät abmelden muss.

6. Verfahren zur Verwaltung einer Vielzahl von Sitzungen von Benutzerendgeräten nach Anspruch 5, **dadurch gekennzeichnet, dass**, wenn der Änderungsantrag betreffend die zweite Sitzung ein Antrag auf Schließen einer Sitzung ist, die Anpassungsparameter die Verbreitungsgruppen bezeichnen, bei denen sich das erste Endgerät anmelden kann.

7. Verfahren zur Verwaltung einer Vielzahl von Multimediasitzungen von Benutzerendgeräten nach einem der Ansprüche 1 bis 6, bei dem die zweite Sitzung eine Sitzung vom Konversationstyp ist, die von einer Sitzungskontrolleinheit verwaltet wird, wobei das Verfahren **dadurch gekennzeichnet ist, dass** der Änderungsantrag von der Sitzungskontrolleinheit empfangen wird, und dass die Nachricht, umfassend die Entscheidung, den Antrag anzunehmen oder abzulehnen, an die Sitzungskontrolleinheit gesandt wird.

8. Verfahren zur Verwaltung einer Vielzahl von Multimediasitzungen von Benutzerendgeräten nach einem der Ansprüche 1 bis 7, **dadurch gekennzeichnet, dass** die abgerufenen Informationen mindestens einen Anmeldungstyp der ersten und zweiten Benutzer umfassen, und dass der Bewertungsschritt den Anmeldungstyp der ersten und zweiten Benutzer berücksichtigt, um eine Neuverteilung der Ressourcen zu bewerten.

9. System (600) zur Steuerung einer Vielzahl von Multimediasitzungen, das Benutzerendgeräte voraussetzt, die an einen Zugangspunkt (100) eines IP-Netzwerks angeschlossen sind, wobei das Netzwerk mindestens einen Sammelknoten (200, 300), mindestens eine erste im Laufen befindliche Sitzung audiovisuellen Typs umfasst, während der das erste Endgerät einen audiovisuellen Inhalt über eine Verbindung (150, 250) empfängt, die sich zwischen dem Zugangspunkt (100) und dem mindestens einen Sammelknoten (200, 300) befindet, wobei das System **dadurch gekennzeichnet ist, dass** der audiovisuelle Inhalt gestaffelt und nach 1+N, wobei N eine ganze Zahl größer als 1 ist, audiovisuellen Strömen codiert ist, wobei der erste Strom eine Basisschicht und die N folgenden audiovisuellen Ströme Erhöhung- oder Verbesserungsschichten darstellen,
wobei das System umfasst:
- Mittel zum Empfang (610) eines Antrags auf Änderung betreffend eine zweite Sitzung unter der Vielzahl von Sitzungen;
- Mittel zum Abrufen (620) von Informationen zu einem Kontext der Vielzahl von Sitzungen, umfassend mindestens eine verfügbare Ressourcenmenge auf der Verbindung, eine verwendete Ressourcenmenge durch mindestens eine erste Sitzung und eine erforderliche Mindestressourcenmenge für den Einsatz der Änderung an der zweiten Sitzung umfassen;
- Mittel zur Bewertung (630) einer Möglichkeit einer Neuverteilung von Ressourcen zwischen der mindestens einen ersten laufenden Sitzung und der zweiten Sitzung, die durch die erforderliche Änderung für die zweite Sitzung induziert wird, auf Basis der verfügbaren Ressourcenmenge auf der Verbindung, der verwendeten Ressourcenmenge durch die mindestens eine erste Sitzung und der erforderlichen Mindestressourcenmenge für die Änderung, wobei die Bewertungsmittel dazu vorgesehen sind, eingesetzt zu werden, wenn die erforderliche Mindestressourcenmenge größer als die auf der Verbindung verfügbare Ressourcenmenge ist;
- Mittel zur Entscheidung (640), den Antrag anzunehmen oder abzulehnen, die dazu vorgesehen sind, im Falle einer positiven Entscheidung eine Anpassung des Transfers des audiovisuellen Inhalts, der auf der Verbindung während der ersten Sitzung durchgeführt wird, zu steuern, wobei die Anzahl N von zu übertragenden audiovisuellen Strömen geändert wird.

10. System zur Steuerung einer Vielzahl von Multimediasitzungen nach Anspruch 9, **dadurch gekennzeichnet, dass** es Mittel umfasst, um eine Nachricht über die Annahme des Antrags an eine Einheit des Netzwerks zu senden, die beauftragt ist, die geforderte Änderung durchzuführen.

11. Plattform (700) zur Verwaltung von audiovisuellen Diensten in einem IP-Netzwerk, **dadurch gekennzeichnet, dass** sie ein System (600) zur Steuerung einer Vielzahl von Sitzungen nach Anspruch 9 umfasst, das Benutzerendgeräte voraussetzt, die an einen Zugangspunkt eines IP-Netzwerks angeschlossen sind.

12. Computerprogrammprodukt, das von einem Kommunikationsnetzwerk heruntergeladen und/oder auf einem von einem Computer lesbare Träger gespeichert und/oder von einem Mikroprozessor ausgeführt werden kann, **dadurch gekennzeichnet, dass** es Programmcodeanweisungen für die Ausführung des Verfahrens nach den Ansprüchen 1 bis 8 umfasst.

13. Aufzeichnungsträger, der von einem Computer lesbar ist, auf dem ein Computerprogrammprodukt aufgezeichnet ist, umfassend Anweisungen für die Ausführung der Schritte des Verfahrens nach einem der Ansprüche 1 bis 8.

## Claims

1. Method for managing a plurality of multimedia sessions involving user terminals that are connected to an access point (100) of an IP network, said network comprising at least one collection node (200, 300), at least one audiovisual first session being in progress, said method being **characterized in that** during said at least one first session a first user terminal receives a scaled audiovisual content, encoded into 1+N, N being an integer higher than or equal to 1, audiovisual streams, the first stream forming a base layer and the N following audiovisual streams enhancement or improvement layers, via a link located between said access point and said at least one collection node (200, 300), said method comprising steps of:
- receiving a message comprising a change request relating to a second session among said plurality of sessions;
- collecting information relating to a context of said plurality of sessions, said information comprising at least one amount of resources available over said link, an amount of resources used by said at least one first session and a minimum amount of resources required to make said change to the second session;
- evaluating a new distribution of the resources between said at least one first session in progress and said second session, induced by the change required by the second session, on the basis of the amount of resources available over the link, the amount of resources used by said at least one first session and the minimum amount of resources required for said change;
- making a decision to accept or reject the change request depending on a result of said evaluating step and sending a message containing said decision; and
- in case of a positive decision, ordering the adaptation of the transfer of the audiovisual content carried out over said link during said first session by modifying said number N of audiovisual streams to be transmitted.

2. Method for managing a plurality of multimedia user-terminal sessions according to Claim 1, **characterized in that** the step of collecting context information consists in sending requests to entities of the IP network in charge of managing said plurality of sessions and in storing the collected information in profiles associated with the user terminals.

3. Method for managing a plurality of user-terminal sessions according to one of Claims 1 and 2, **characterized in that** said plurality of scaled audiovisual streams is transported via a plurality of delivery groups and **in that** the step of ordering the adaptation of the transfer of the audiovisual content consists in sending, to the first terminal, via said link (150), a message (20) comprising adaptation parameters designating the delivery groups to which said first user terminal may subscribe or must unsubscribe.

4. Method for managing a plurality of user-terminal sessions according to one of Claims 1 and 2, **characterized in that** said plurality of scaled audiovisual streams is transported in point-to-point mode over said link and **in that** the step of ordering the adaptation of the transfer of the audiovisual content consists in sending, to the first terminal, via said link (150), a message (20) containing adaptation parameters designating the audiovisual streams that it may ask to receive.

5. Method for managing a plurality of user-terminal sessions according to Claim 3, **characterized in that**, when the change request is a request to establish the second session, said adaptation parameters designate the delivery groups to which said first terminal must unsubscribe.

6. Method for managing a plurality of user-terminal sessions according to Claim 5, **characterized in that**, when the change request relating to the second session is a session closure request, said adaptation parameters designate the delivery groups to which said first terminal may subscribe.

7. Method for managing a plurality of multimedia user-terminal sessions according to any one of Claims 1 to 6, wherein said second session is a conversational session managed by a session controlled entity, said method being **characterized in that** said change request is received by said session control entity and **in that** said message containing said decision to accept or to reject the request is sent to said session control entity.

8. Method for managing a plurality of multimedia user-terminal sessions according to any one of Claims 1 to 7, **characterized in that** said collected information comprises at least one type of subscription of said first and second users and **in that** said evaluating step takes into account the type of subscription of said first and second users when evaluating a new distribution of the resources.

9. System (600) for controlling a plurality of multimedia sessions involving user terminals that are connected to an access point (100) of an IP network, said network comprising at least one collection node (200, 300), at least one audiovisual first session being in progress, during which session said first terminal receives an audiovisual content via a link (150, 250) located between said access point (100) and said at least one collection node (200, 300), said system being **characterized in that** said audiovisual content is scaled, and encoded in 1+N, N being an integer higher than or equal to 1, audiovisual streams, the first stream forming a base layer and the N following audiovisual streams enhancement or improvement layers, said system comprising:
- means (610) for receiving a change request relating to a second session among said plurality of sessions;
- means (620) for collecting information relating to a context of said plurality of sessions comprising at least one amount of resources available over said link, an amount of resources used by said at least one first session and a minimum amount of resources required to make said change to the second session;
- means (630) for evaluating whether a new distribution of resources between said at least one first session in progress and said second session, induced by the change required for the second session, is possible on the basis of the amount of resources available over the link, the amount of resources used by said at least one first session and the minimum amount of resources required for said change, said evaluating means being suitable for being implemented if the required minimum amount of resources is higher than the amount of resources available over said link;
- means (640) for making a decision to accept or reject the changed request, in case of a positive decision, for ordering an adaptation of the transfer of the audiovisual content carried out over said link during said first session by modifying said number N of audiovisual streams to be transmitted.

10. System for controlling a plurality of multimedia sessions according to Claim 9, **characterized in that** it comprises means for sending a message of acceptance of said request to an entity of the network in charge of implementing the required change.

11. Platform (700) for managing audiovisual services in an IP network, **characterized in that** it comprises a system (600) for controlling a plurality of sessions involving user terminals that are connected to an access point of an IP network according to Claim 9.

12. Computer-program product that is downloadable from a communication network and/or stored on a computer-readable medium and/or executable by a microprocessor, **characterized in that** it comprises program-code instructions for the execution of the method according to Claims 1 to 8.

13. Computer-readable medium on which a computer-program product comprising instructions for the execution of the steps of the method according to any one of Claims 1 to 8 is stored.
